# EUROPÄISCHE PATENTANMELDUNG

(11) **EP 2 740 569 A2**
(43) Veröffentlichungstag der Anmeldung: **11.06.2014**
(21) Anmeldenummer: 13187540.3
(22) Anmeldetag: 07.10.2013
(51) Int. Cl.: B25B 11/00, B23Q 1/03, B23Q 16/00, B23Q 3/08

(54) **Konsolentisch für eine Holzbearbeitungsmaschine**

(30) Priorität: 10.12.2012 DE 202012104805 U
(71) Anmelder: HOLZ-HER GmbH, 72622 Nürtingen (DE)
(72) Erfinder: Lorber, Denis, 72663 Grossbettlingen (DE); Stolz, Jochen, 72574 Bad Urach (DE); Klöckl, Erwin, 8584 Hirschegg (AT)
(74) Vertreter: Hoeger, Stellrecht & Partner Patentanwälte

(57) **Zusammenfassung**

Die Erfindung betrifft einen Konsolentisch (10) für eine Holzbearbeitungsmaschine, insbesondere für ein CNC-Holzbearbeitungszentrum, mit mindestens zwei Führungsschienen (18, 20) und mit verschiebbaren Konsolen (22, 24, 26, 28), die entlang der Führungsschienen (18, 20) verschiebbar und in einer gewünschten Position an den Führungsschienen (18, 20) lösbar arretierbar sind und auf deren Oberseiten Vakuumspanner (50) für ein zu bearbeitendes Werkstück positionierbar sind, und mit Anschlagelementen (58, 64, 66, 68, 70), die mindestens ein Bearbeitungsfeld (72, 74) für ein zu bearbeitendes Werkstück begrenzen. Um den Konsolentisch (10) derart weiterzubilden, dass er eine höhere Steifigkeit aufweist, wird vorgeschlagen, dass in mindestens einem Bearbeitungsfeld (72, 74) eine ortsfeste Konsole (30, 32) angeordnet ist.

## Beschreibung

Die Erfindung betrifft einen Konsolentisch für eine Holzbearbeitungsmaschine, insbesondere für ein CNC-Holzbearbeitungszentrum, mit mindestens zwei Führungsschienen und mit verschiebbaren Konsolen, die entlang der Führungsschienen verschiebbar und in einer gewünschten Position an den Führungsschienen lösbar arretierbar sind und auf deren Oberseiten Vakuumspanner für ein zu bearbeitendes Werkstück positionierbar sind, und mit Anschlagelementen, die mindestens ein Bearbeitungsfeld für ein zu bearbeitendes Werkstück begrenzen.

Derartige Konsolentische dienen der Festlegung von Werkstücken, die mit Hilfe von Bearbeitungswerkzeugen der Holzbearbeitungsmaschine bearbeitet werden sollen. Die verschiebbaren Konsolen können entlang der Führungsschienen verschoben und in einer gewünschten Position arretiert werden. Vakuumspanner können auf den Oberseiten der Konsolen so angeordnet werden, dass bei der Bearbeitung des jeweiligen Werkstückes eine Kollision des Bearbeitungswerkstücks mit den Vakuumspannern ausgeschlossen ist.

Die Konsolentische weisen mindestens ein Bearbeitungsfeld auf, in dem ein zu bearbeitendes Werkstück positioniert werden kann.

Zum Ausrichten des zu bearbeitenden Werkstücks relativ zu einer vorgegebenen Position des Bearbeitungswerkzeugs kommen Anschlagelemente zum Einsatz, die das Bearbeitungsfeld begrenzen und an die das zu bearbeitende Werkstück mit einer Werkstückkante anlegbar ist.

Aufgabe der vorliegenden Erfindung ist es, einen Konsolentisch der gattungsgemäßen Art derart weiterzubilden, dass der Konsolentisch eine höhere Steifigkeit aufweist.

Diese Aufgabe wird bei einem Konsolentisch der eingangs genannten Art erfindungsgemäß dadurch gelöst, dass in mindestens einem Bearbeitungsfeld eine ortsfeste Konsole angeordnet ist.

Der erfindungsgemäße Konsolentisch zeichnet sich dadurch aus, dass zusätzlich zu verschiebbaren Konsolen mindestens eine ortsfeste Konsole zum Einsatz kommt. Die ortsfeste Konsole verleiht dem Konsolentisch eine besonders hohe mechanische Steifigkeit.

Die ortsfeste Konsole kann sehr verwindungssteif ausgestaltet sein und kann sich quer zu einer Längsachse des Konsolentisches von einer Vorderseite bis zu einer Rückseite des Konsolentisches erstrecken.

Vorzugsweise ist an mindestens einer Querseite eines Bearbeitungsfeldes eine ortsfeste Konsole angeordnet. Unter einer Querseite wird hierbei eine Seite eines Bearbeitungsfeldes verstanden, die sich quer zur Längsachse des Konsolentisches erstreckt. Eine ortsfeste Konsole ist bevorzugt an einer derartigen Längsseite eines Bearbeitungsfeldes angeordnet, so dass sich das Bearbeitungsfeld ausgehend von der ortsfesten Konsole in Längsrichtung des Konsolentisches erstreckt.

Vor Vorteil ist es, wenn der Konsolentisch zwei Bearbeitungsfelder aufweist, an deren einander abgewandten Querseiten jeweils eine ortsfeste Konsole angeordnet ist. Bei einer derartigen Ausgestaltung weist der Konsolentisch ein erstes Bearbeitungsfeld für ein erstes Werkstück auf sowie ein zweites Bearbeitungsfeld, das in Längsrichtung des Konsolentisches neben dem ersten Bearbeitungsfeld angeordnet ist und in dem ein zweites Werkstück positioniert werden kann. An den einander abgewandten Querseiten der beiden Bearbeitungsfelder ist jeweils eine ortsfeste Konsole angeordnet. Die beiden Bearbeitungsfelder erstrecken sich somit zwischen den ortsfesten Konsolen. Der Einsatz von zwei ortsfesten Konsolen, die im Abstand zueinander angeordnet sind, verleiht dem Konsolentisch eine besonders hohe Steifigkeit.

Von besonderem Vorteil ist es, wenn an mindestens einer ortsfesten Konsole zumindest ein Anschlagelement angeordnet ist. Im Gegensatz zu den verschiebbaren Konsolen nimmt die ortsfeste Konsole eine vorgegebene ortsfeste Position ein. Das mindestens eine Anschlagelement, das an der ortsfesten Konsole angeordnet ist, weist somit ebenfalls eine vorgegebene, unveränderliche Position auf. Die ortsfeste Konsole bildet hierbei eine Tragstruktur für das Anschlagelement. Die hohe Verwindungssteifigkeit der ortsfesten Konsole verhindert es, dass das mindestens eine Anschlagelement bei einer mechanischen Belastung durch das zu bearbeitende Werkstück unbeabsichtigt seine Position verändert.

Günstig ist es, wenn an mindestens einer ortsfesten Konsole mehrere Anschlagelemente angeordnet sind.

Bei einer bevorzugten Ausgestaltung ist an mindestens einer ortsfesten Konsole zumindest ein erstes Anschlagelement angeordnet, an das das zu bearbeitende Werkstück mit einer parallel zu einer Längsachse des Konsolentisches ausgerichteten Werkstückkante anlegbar ist.

Zumindest an einer Stirnseite der ortsfesten Konsole oder auch im Bereich zwischen den beiden Stirnseiten der ortsfesten Konsole ist günstigerweise ein erstes Anschlagelement positioniert. Das erste Anschlagelement begrenzt eine Bewegung des Werkstückes auf dem Konsolentisch quer zu dessen Längsachse.

Alternativ oder ergänzend kann vorgesehen sein, dass an mindestens einer ortsfesten Konsole zumindest ein zweites Anschlagelement angeordnet ist, an das das zu bearbeitende Werkstück mit einer quer zur Längsachse des Konsolentisches ausgerichteten Werkstückkante anlegbar ist. Mittels des zweiten Anschlagelementes kann eine Bewegung des Werkstückes auf dem Konsolentisch in Richtung von dessen Längsachse begrenzt werden.

Von besonderem Vorteil ist es, wenn zumindest an einer Längsseite der ortsfesten Konsole oder auch im Bereich zwischen den beiden Längsseiten der ortsfesten Konsole ein zweites Anschlagelement angeordnet ist.

Es kann vorgesehen sein, dass zumindest eine ortsfeste Konsole an ihren einander abgewandten Stirnseiten und an mindestens einer Längsseite Anschlagelemente trägt. Insbesondere kann vorgesehen sein, dass den an einer Stirnseite der ortsfesten Konsole angeordneten Anschlagelementen benachbart jeweils ein an einer Längsseite der ortsfesten Konsole angeordnetes Anschlagelement angeordnet ist.

Wie bereits erwähnt, ist es von Vorteil, wenn die mindestens eine ortsfeste Konsole ein Bearbeitungsfeld der Holzbearbeitungsmaschine begrenzt, wobei an einer Längsseite der ortsfesten Konsole zumindest ein Anschlagelement angeordnet ist.

Die Holzbearbeitungsmaschine kann beispielsweise zwei Bearbeitungsfelder aufweisen, in denen sie abwechselnd jeweils ein Werkstück bearbeiten kann. Die Werkstücke können hierbei auf dem Konsolentisch positioniert werden, wobei dieser an einem ersten Ende und an einem zweiten Ende des Konsolentisches jeweils eine ortsfeste Konsole aufweist.

Günstigerweise sind zwei ortsfeste Konsolen den Enden der Führungsschienen benachbart angeordnet, so dass sich die Führungsschienen zwischen den beiden ortsfesten Konsolen erstrecken. Auf ihren den Führungsschienen abgewandten Längsseiten weisen die ortsfesten Konsolen bei einer vorteilhaften Ausgestaltung jeweils mindestens ein Anschlagelement auf. Zwischen den beiden ortsfesten Konsolen kann auf den Führungsschienen mindestens eine verschiebbare Konsole gehalten sein, die entlang der Führungsschienen zwischen den beiden ortsfesten Konsolen hin und her geschoben und in einer gewünschten Stellung arretiert werden kann.

Vorzugsweise tragen die Führungsschienen mehrere verschiebbare Konsolen, die im Bereich zwischen zwei ortsfesten Konsolen vom Benutzer in einer gewünschten Stellung positionierbar und an den Führungsschienen lösbar arretierbar sind.

Es kann vorgesehen sein, dass zumindest eine verschiebbare Konsole an mindestens einer Stirnseite oder auch im Bereich zwischen ihren beiden Stirnseiten ein erstes Anschlagelement trägt, an das das zu bearbeitende Werkstück mit einer parallel zur Längsachse des Konsolentisches ausgerichteten Werkstückkante anlegbar ist.

Bevorzugt tragen sämtliche bewegbaren Konsolen, beispielsweise jeweils an einer Stirnseite, fluchtend zueinander ausgerichtete erste Anschlagelemente, an die das zu bearbeitende Werkstück mit einer Werkstückkante anlegbar ist. Dies erleichtert die Ausrichtung des zu bearbeitenden Werkstücks auf dem Konsolentisch.

Bei einer vorteilhaften Ausgestaltung des erfindungsgemäßen Konsolentisches tragen sowohl die bewegbaren Konsolen als auch die mindestens eine ortsfeste Konsole, beispielsweise jeweils an einer Stirnseite, fluchtend zueinander ausgerichtete erste Anschlagelemente, an die das zu bearbeitende Werkstück mit einer Werkstückkante anlegbar ist.

Bei einer bevorzugten Ausgestaltung des erfindungsgemäßen Konsolentisches weisen die verschiebbaren Konsolen und die mindestens eine ortsfeste Konsole identische Profilkörper auf mit einer Oberseite und mit einer ersten und einer zweiten Längsseite, wobei an den Oberseiten der Profilkörper die Vakuumspanner positionierbar sind. Die Profilkörper bilden Aufspannbalken aus und tragen auf ihrer Oberseite die Vakuumspanner. Die Profilkörper sind profiliert, so dass sie eine sehr hohe Verwindungssteifigkeit aufweisen. Da für die verschiebbaren Konsolen und für die mindestens eine ortsfeste Konsole identische Profilkörper zum Einsatz kommen, vereinfacht sich der konstruktive Aufbau des Konsolentischs.

Die Profilkörper umfassen günstigerweise ein integriertes Vakuumsystem, um auf ihrer Oberseite mittels der Vakuumspanner das zu bearbeitende Werkstück festlegen zu können. Das Vakuumsystem umfasst Vakuumkanäle, an die eine Unterdruckquelle anschließbar ist, insbesondere eine Vakuumpumpe. Sämtliche Profilkörper weisen vorteilhafterweise derartige Vakuumkanäle auf.

Die Profilkörper weisen bei einer vorteilhaften Ausführungsform der Erfindung erste und zweite Stirnseiten auf, an denen jeweils ein Anschlagkörper mit einem ersten Anschlagelement fixierbar ist. Die Anschlagkörper sind vorteilhafterweise ebenso wie die Profilkörper profiliert. Dies erhöht deren Verwindungssteifigkeit. Auch im Bereich zwischen den beiden Stirnseiten kann an mindestens einem Profilkörper ein Anschlagelement angeordnet sein.

Die Profilkörper der verschiebbaren Konsolen sind bevorzugt an längs der Führungsschienen verschiebbaren Führungsschlitten gehalten.

Der Profilkörper der mindestens einen ortsfesten Konsole ist bevorzugt an einem Stützkörper gehalten. Der Stützkörper kann ebenso wie die Führungsschienen beispielsweise an einem Maschinengestell festgelegt werden.

Die nachfolgende Beschreibung einer vorteilhaften Ausführungsform der Erfindung dient im Zusammenhang mit der Zeichnung der näheren Erläuterung. Es zeigen:

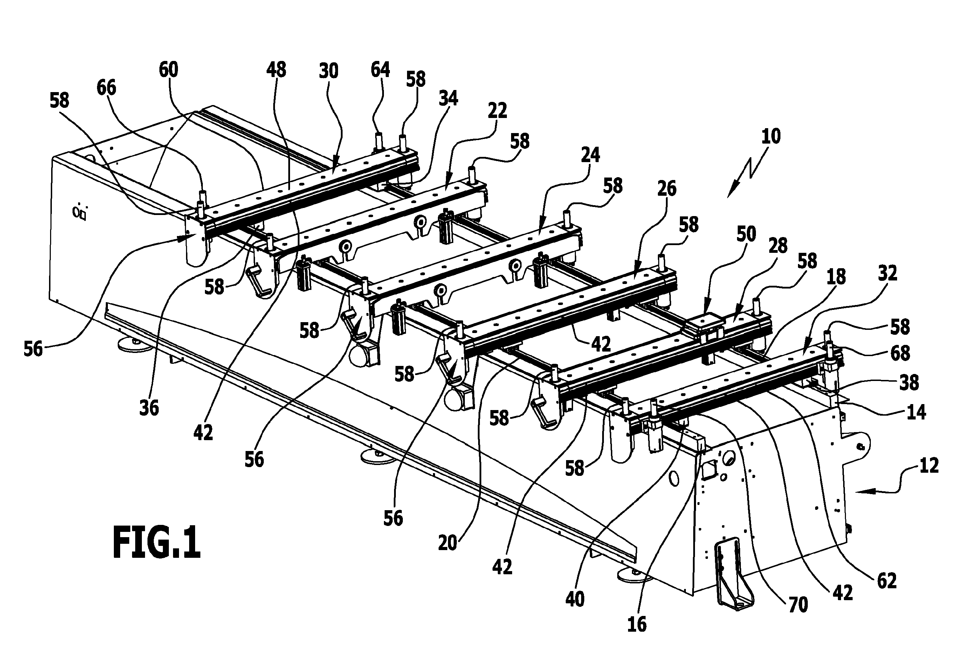

- Figur 1:: eine perspektivische Darstellung eines Maschinengestells, auf dem ein Konsolentisch für eine Holzbearbeitungsmaschine angeordnet ist;

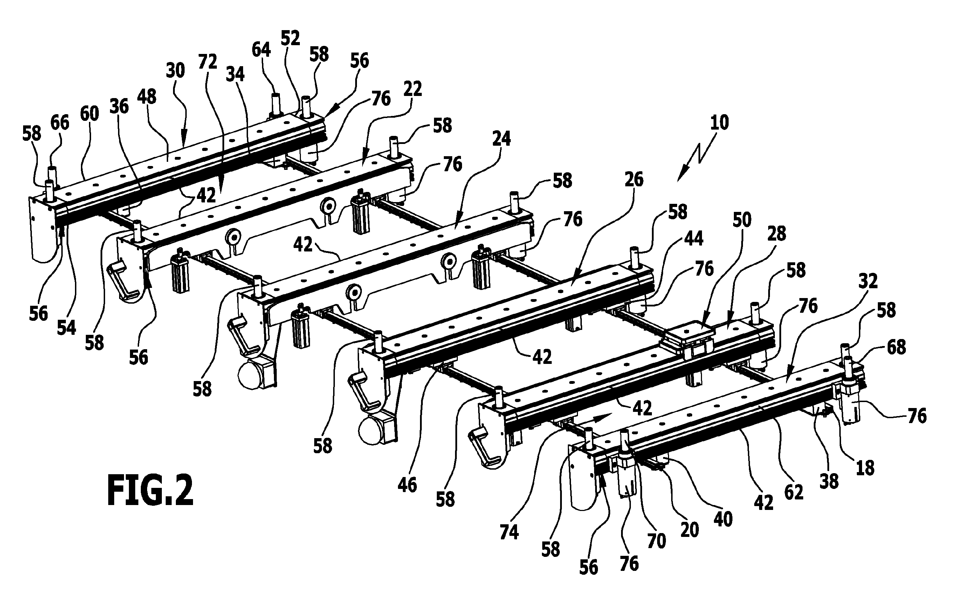

- Figur 2:: eine perspektivische Darstellung des Konsolentischs aus Figur 1, und

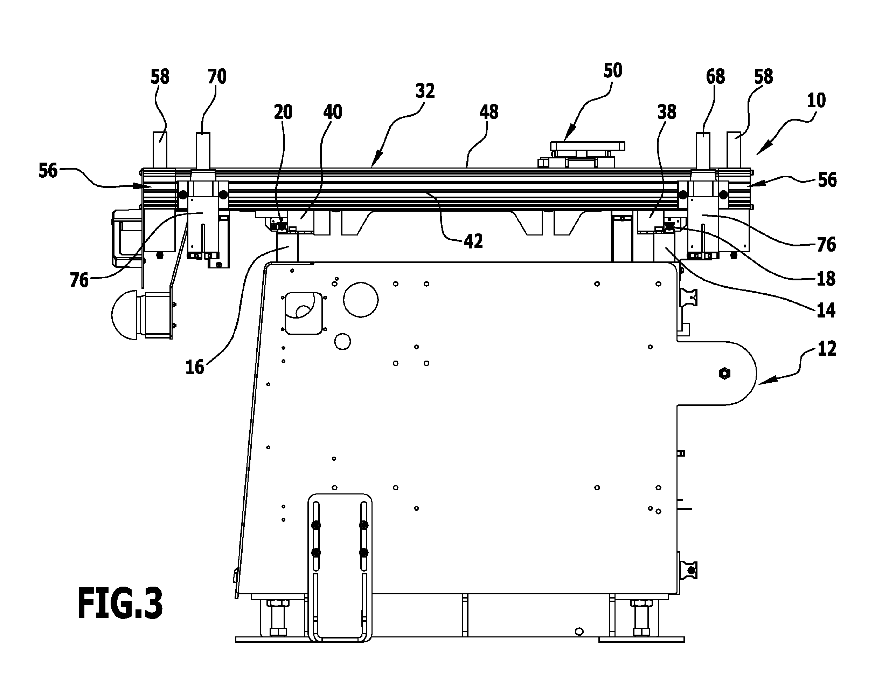

- Figur 3:: eine Seitenansicht des Maschinengestells mit dem Konsolentisch aus Figur 1.

In der Zeichnung ist schematisch eine vorteilhafte Ausführungsform eines erfindungsgemäßen Konsolentisches für eine Holzbearbeitungsmaschine, insbesondere für ein CNC-Holzbearbeitungszentrum dargestellt. Der Konsolentisch trägt insgesamt das Bezugszeichen 10 und ist auf einem Maschinengestell 12 montiert, das zu diesem Zweck auf seiner Oberseite im Abstand zueinander und parallel zueinander ausgerichtet zwei Tragkörper 14, 16 aufweist, die jeweils in Form eines Vierkantprofiles ausgestaltet sind. Der Konsolentisch 10 weist eine erste Führungsschiene 18 und eine zweite Führungsschiene 20 auf. Die erste Führungsschiene 18 ist auf dem Tragkörper 14 festgelegt und die zweite Führungsschiene 20 ist auf dem Tragkörper 16 festgelegt. Die beiden Führungsschienen 18, 20 tragen mehrere verschiebbare Konsolen 22, 24, 26, 28, die längs der Führungsschienen 18, 20 verschiebbar und in einer gewünschten Position arretierbar sind. Zusätzlich zu den verschiebbaren Konsolen 22, 24, 26, 28 umfasst der Konsolentisch 10 zwei ortsfeste Konsolen 30, 32, die in Höhe der Endbereiche der beiden Führungsschienen 18, 20 mit Hilfe von ortsfesten Stützkörpern 34, 36 bzw. 38, 40 an den Tragkörpern 14, 16 des Maschinengestells 12 festgelegt sind. Die verschiebbaren Konsolen 22, 24, 26, 28 und die ortsfesten Konsolen 30, 32 weisen identische balkenartige Profilkörper 42 auf, auf deren Oberseite 48 Vakuumspanner 50 positioniert werden können. Die Profilkörper 42 der verschiebbaren Konsolen 22, 24, 26, 28 sind jeweils mit Hilfe eines ersten Führungsschlittens 44 und eines zweiten Führungsschlittens 46 an den Führungsschienen 18, 20 verschiebbar gehalten. Zur Erzielung einer besseren Übersicht ist in der Zeichnung nur ein Vakuumspanner 50 dargestellt, tatsächlich können aber auf jeden Profilkörper 42 je nach Bedarf ein oder mehrere Vakuumspanner positioniert werden.

In die Profilkörper 42 aller Konsolen 22, 24, 26, 28, 30, 32 ist ein an sich bekanntes und deshalb zur Erzielung einer besseren Übersicht in der Zeichnung nicht dargestelltes Vakuumsystem mit Vakuumkanälen integriert, die an eine externe Unterdruckquelle, insbesondere eine Vakuumpumpe, angeschlossen werden können. Die Vakuumspanner 50 erlauben es, ein zu bearbeitendes Werkstück auf dem Konsolentisch 10 festzulegen. Durch Verschieben der verschiebbaren Konsolen 22, 24, 26, 28 entlang der Führungsschienen 18, 20 und durch geeignete Positionierung der Vakuumspanner 50 auf den Oberseiten 48 der Profilkörper 42 kann das zu bearbeitende Werkstück optimal abgestützt und festgelegt werden, ohne dass die Gefahr einer Kollision eines Bearbeitungswerkzeuges der Holzbearbeitungsmaschine mit einem Vakuumspanner 50 besteht.

Die Profilkörper 42 aller Konsolen 22 bis 32 weisen jeweils eine erste Stirnseite 52 und eine zweite Stirnseite 54 auf. An diesen Stirnseiten 52, 54 sind die Profilkörper 42 jeweils mit einem Anschlagkörper 56 lösbar verbunden, der im dargestellten Ausführungsbeispiel jeweils ein erstes Anschlagelement 58 aufweist und in derselben Weise profiliert ist wie der Profilkörper 42. Die an einer ersten Stirnseite 52 angeordneten ersten Anschlagelemente 58 sind fluchtend zueinander und parallel zu einer Längsachse 59 des Konsolentisches 10 ausgerichtet ebenso wie die an einer zweiten Stirnseite 54 angeordneten ersten Anschlagelemente 58. Alternativ oder ergänzend zu stirnseitig angeordneten Anschlagelementen kann zumindest ein Profilkörper 42 auch im Bereich zwischen seinen Stirnseiten Anschlagelemente aufweisen. Günstigerweise sind die Anschlagelemente mit den Profilkörpern lösbar verbindbar.

Die verschiebbaren Konsolen 22, 24, 26, 28 sind zwischen den beiden ortsfesten Konsolen 30, 32 angeordnet. Auf ihrer den restlichen Konsolen abgewandten ersten Längsseite 60 trägt die ortsfeste Konsole 30 zwei zweite Anschlagelemente 64, 66, die jeweils einem ersten Anschlagelement 58 benachbart angeordnet sind. In entsprechender Weise trägt die ortsfeste Konsole 32 auf ihrer den restlichen Konsolen abgewandten zweiten Längsseite 62 zwei zweite Anschlagelemente 68, 70, die jeweils einem ersten Anschlagelement 58 benachbart angeordnet sind.

Mit ihren zweiten Anschlagelementen 64, 66 begrenzt die ortsfeste Konsole 30 in Richtung der Längsachse 59 ein erstes Bearbeitungsfeld 72, auf dem ein erstes zu bearbeitendes Werkstück positioniert werden kann. In entsprechender Weise begrenzt die ortsfeste Konsole 32 mit ihren an der zweiten Längsseite 62 angeordneten zweiten Anschlagelementen 68, 70 ein zweites Bearbeitungsfeld 74, auf dem ein zweites, zu bearbeitendes Werkstück positioniert werden kann. Die beiden Werkstücke können abwechselnd von einem Bearbeitungswerkzeug der Holzbearbeitungsmaschine bearbeitet werden.

Von Vorteil ist es, wenn die ersten Anschlagelemente 58 identisch ausgestaltet sind wie die zweiten Anschlagelemente 64, 66, 68, 70.

Vorteilhafterweise sind die ersten Anschlagelemente 58 ebenso wie die zweiten Anschlagelemente 64, 66, 68, 70 zwischen einer Anschlagstellung, wie sie in der Zeichnung dargestellt ist, und einer Freigabestellung hin und her bewegbar. In der Anschlagstellung ragen sie so weit über die Oberseite der Profilkörper 42 hinaus, dass ein zu bearbeitendes Werkstück mit einer Werkstückkante an den Anschlagelementen angelegt werden kann. In ihrer Freigabestellung nehmen die Anschlagelemente 58, 64, 66, 68, 70 eine zurückgezogene Position ein, so dass sie mit einem zu bearbeitenden Werkstück nicht zusammenwirken können. Zum hin und her bewegen der Anschlagelemente 58, 64, 66, 68, 70 kann jeweils ein pneumatisches Kolben-Zylinderaggregat 76 zum Einsatz kommen, das mit einer Druckluftquelle verbindbar ist.

Der Konsolentisch 10 zeichnet sich durch eine hohe Steifigkeit aus. Zu bearbeitende Werkstücke können auf einfache Weise auf dem Konsolentisch in einer vorgegebenen Position ausgerichtet und festgelegt werden.

## Patentansprüche

1. Konsolentisch für eine Holzbearbeitungsmaschine mit mindestens zwei Führungsschienen (18, 20) und mit verschiebbaren Konsolen (22, 24, 26, 28), die entlang der Führungsschienen (18, 20) verschiebbar und in einer gewünschten Position an den Führungsschienen (18, 20) lösbar arretierbar sind und auf deren Oberseiten Vakuumspanner (50) für ein zu bearbeitendes Werkstück positionierbar sind, und mit Anschlagelementen (58, 64, 66, 68, 70), die mindestens ein Bearbeitungsfeld (72, 74) für ein zu bearbeitendes Werkstück begrenzen, **dadurch gekennzeichnet, dass** in mindestens einem Bearbeitungsfeld (72, 74) eine ortsfeste Konsole (30, 32) angeordnet ist.

2. Konsolentisch nach Anspruch 1, **dadurch gekennzeichnet, dass** an mindestens einer Querseite eines Bearbeitungsfeldes (72, 74) eine ortsfeste Konsole (30, 32) angeordnet ist.

3. Konsolentisch nach Anspruch 1 oder 2, **dadurch gekennzeichnet, dass** der Konsolentisch (10) zwei Bearbeitungsfelder (72, 74) aufweist, an deren einander abgewandten Querseiten jeweils eine ortsfeste Konsole (30, 32) angeordnet ist.

4. Konsolentisch nach einem der voranstehenden Ansprüche, **dadurch gekennzeichnet, dass** an mindestens einer ortsfesten Konsole (30, 32) zumindest ein Anschlagelement (58, 64, 66) angeordnet ist.

5. Konsolentisch nach einem der voranstehenden Ansprüche, **dadurch gekennzeichnet, dass** an mindestens einer ortsfesten Konsole (30, 32) zumindest ein ersten Anschlagelement (58) angeordnet ist, an das das zu bearbeitende Werkstück mit einer parallel zu einer Längsachse (59) des Konsolentisches (10) ausgerichteten Werkstückkante anlegbar ist.

6. Konsolentisch nach Anspruch 5, **dadurch gekennzeichnet, dass** zumindest an einer Stirnseite (52, 54) der ortsfesten Konsole (30, 32) und/oder im Bereich zwischen seinen beiden Stirnseiten (52, 54) ein erstes Anschlagelement (58) positioniert ist.

7. Konsolentisch nach einem der voranstehenden Ansprüche, **dadurch gekennzeichnet, dass** an mindestens einer ortsfesten Konsole (30, 32) zumindest ein zweites Anschlagelement (64, 66, 68, 70) angeordnet ist, an das das zu bearbeitende Werkstück mit einer quer zur Längsachse (59) des Konsolentisches (10) ausgerichteten Werkstückkante anlegbar ist.

8. Konsolentisch nach Anspruch 7, **dadurch gekennzeichnet, dass** zumindest an einer Längsseite der ortsfesten Konsole (30, 32) und/oder im Bereich zwischen seinen beiden Längsseiten ein zweites Anschlagelement (64, 66, 68, 70) angeordnet ist.

9. Konsolentische nach einem der voranstehenden Ansprüche, **dadurch gekennzeichnet, dass** zumindest eine ortsfeste Konsole (30, 32) an ihren einander abgewandten Stirnseiten (52, 54) und an mindestens einer Längsseite (60, 62), Anschlagelemente (58, 64, 66, 68,70) trägt.

10. Konsolentisch nach einem der voranstehenden Ansprüche, **dadurch gekennzeichnet, dass** die verschiebbaren Konsolen (22, 24, 26, 28) und die mindestens eine ortsfeste Konsole (30, 32) identische Profilkörper (42) aufweisen mit einer Oberseite (48) und mit ersten und zweiten Längsseiten (60, 62), wobei an der Oberseite (48) Vakuumspanner (50) positionierbar sind.

11. Konsolentisch nach Anspruch 10, **dadurch gekennzeichnet, dass** die Profilkörper (42) eine erste und eine zweite Stirnseite (52, 54) aufweisen, an denen jeweils ein Anschlagkörper (56) mit einem stirnseitigen Anschlagelement (58) fixierbar ist.

12. Konsolentisch nach Anspruch 10 oder 11, **dadurch gekennzeichnet, dass** zumindest ein Profilkörper im Bereich zwischen seinen beiden Stirnseiten (52, 54) ein Anschlagelement aufweist.

13. Konsolentisch nach Anspruch 10, 11 oder 12, **dadurch gekennzeichnet, dass** die Profilkörper (42) der verschiebbaren Konsolen (22, 24, 26, 28) an längs der Führungsschienen (18, 20) verschiebbaren Führungsschlitten (44, 46) gehalten sind.

14. Konsolentisch nach einem der Ansprüche 10 bis 13, **dadurch gekennzeichnet, dass** der Profilkörper (42) der mindestens einen ortsfesten Konsole (30, 32) an einem Stützkörper (34, 36) gehalten ist.
